Europäisches Patentamt

European Patent Office

Office européen des brevets

(19)

(11) Numéro de publication: **0 198 771**
**B1**

(12) # FASCICULE DE BREVET EUROPEEN

(45) Date de publication du fascicule du brevet:
26.04.89

(51) Int. Cl.⁴: **B41M 5/26, B41M 5/24,**
**B29C 59/16, G03F 3/00,**
**A01K 11/00**

(21) Numéro de dépôt: 86400783.6

(22) Date de dépôt: 11.04.86

(54) **Procédé pour rendre une matière plastique sensible au rayon laser et permettre son marquage au laser et article obtenu.**

(30) Priorité: 12.04.85 FR 8505525

(43) Date de publication de la demande:
22.10.86 Bulletin 86/43

(45) Mention de la délivrance du brevet:
26.04.89 Bulletin 89/17

(84) Etats contractants désignés:
BE CH DE GB IT LI LU NL

(56) Documents cités:
FR-A- 2 546 712
GB-A- 2 107 322

PATENTS ABSTRACTS OF JAPAN,
vol. 8, no. 191 (M-322) [1628] 4 septembre 1984, & JP - A
- 59 82 185
PATENTS ABSTRACTS OF JAPAN,
vol. 8, no. 147, (P-285) (1584) 10 juillet 1984, & JP - A
- 59 45 642

(73) Titulaire: **Société d'Applications Plastiques**
**Rhône-Alpes (SAPRA), Sillans, F-38590 Saint-Etienne**
**de Saint-Geoirs(Isère)(FR)**

(72) Inventeur: **Lecomte, Gilbert, 50, rue des Primevères,**
**F-38140 Rives-sur-Fure(FR)**

(74) Mandataire: **Fruchard, Guy et al, CABINET**
**BOETTCHER 23, rue la Boétie, F-75008 Paris(FR)**

ACTORUM AG

## Description

L'invention a pour objet un procédé dont la mise en œuvre permet de rendre sensible à un rayon laser une matière plastique d'un type quelconque et, par conséquent, qui permet de marquer ensuite cette matière plastique au moyen d'un laser en y faisant un marquage indélébile suffisamment précis et contrasté pour être lisible par les appareils à lecture optique.

Le marquage des matières plastiques à des fins diverses est un problème général qui a reçu diverses solutions satisfaisantes dans des cas particuliers. Cependant, dès que l'on exige que le marquage résiste à des conditions sévères de durée, et surtout d'abrasion, peu de solutions sont acceptables. Si on ajoute, en plus la contrainte d'une précision définie du marquage, de la conservation dans le temps de cette précision et de la possibilité de lire à distance la marque faite, après plusieurs années d'exposition à un milieu peu favorable, plutôt abrasif, aucune solution connue ne convient.

La précision et la résistance du marquage ne sont pas seulement des qualités appréciables d'une façon générale. Elles deviennent des exigences absolues quand la marque faite consiste en un code à barres dont la raison d'être est de pouvoir être lisible par les appareils à lecture optique. Une telle lecture automatique par un appareil n'est possible que lorsque le marquage conserve dans le temps un contraste suffisant et surtout, quand les traits de largeurs diverses et définies des barres sont tracés avec une précision convenable qui s'exprime par une tolérance de 10% de la largeur nominale, ce qui conduit à une précision absolue qui est de l'ordre de 1/100 mm.

Bien entendu, le procédé de marquage doit aussi être rapide et économique. Le moyen connu et utilisé, le meilleur sous ce double aspect, est le marquage au jet d'encre. Il n'est pas réellement satisfaisant pour le marquage des matières plastiques à cause d'une adhérence insuffisante de l'encre. On tente d'y remédier en se servant d'une encre agressive qui mord la matière plastique et s'y incruste. Mais ce moyen de marquage ne peut être employé pour les marques faites en code à barres qui doivent être lisibles par un appareil à lecture optique pendant plusieurs années; la raison en est que l'encre migre dans la matière plastique et que la précision initiale de la largeur des traits n'est pas conservée si bien que les lectures automatiques faites par les appareils comportent un pourcentage élevé d'erreurs de lecture.

On sait, par ailleurs, que le laser permet de travailler avec une grande précision, mais la plupart des matières plastiques sont transparentes au rayon laser et sont, par conséquent, insensibles à son action.

Pour ces raisons il est désirable de parvenir à un procédé qui permette de rendre sensible au rayon laser les matières plastiques transparentes à ce rayon, afin de pouvoir marquer ensuite ces mêmes matières d'une manière précise et indélébile, par une opération rapide et économique.

Toutefois, rendre les matières plastiques sensibles à l'action d'un laser n'est pas suffisant dans la plupart des circonstances. En effet, beaucoup de matières plastiques ont une composition qui a été adaptée exactement à des besoins particuliers, après de longs travaux d'essais et de mise au point. Par exemple, on sait que l'on utilise depuis longtemps des marques d'oreille pour l'identification des animaux, particulièrement des bovins. Ces marques ont d'abord été réalisées en métal, ce qui n'était pas très satisfaisant parce que le métal, trop dur et trop rigide, était la cause de blessures des animaux. On a réussi à réaliser des marques d'oreille en matière plastique qui donnent entière satisfaction, sous forme d'une plaquette ayant une épaisseur de 1,20 mm. Une telle plaquette est souple; elle doit aussi être résistante mécaniquement. Il a été reconnu que, pour les bovins, elle doit avoir une dureté de 60 Shore; mais pour les ovins, il a été constaté qu'une dureté plus élevée de 74 Shore, qui ne convient pas pour les bovins, est nécessaire. En outre, une telle plaquette ne doit pas être sujette aux attaques bactériologiques. Elle doit aussi avoir une bonne résistance à l'abrasion parce qu'elle est susceptible d'être portée par une vache pendant une durée moyenne de 8 années. Bien entendu, la matière plastique qui constitue la plaquette doit permettre le marquage que l'on a jamais su réaliser jusqu'à présent qu'à l'aide d'encre déposée par impression ou par jet. Le marquage à l'encre, imprimé ou projeté, doit résister aussi à l'usure. Il existe une norme française No NF-T 54006 qui définit les essais d'abrasion que le marquage doit supporter; une résistance à 1000 cycles de frottement est souhaitable. Le marquage à l'encre y satisfait difficilement. Mais, pour les raisons déjà dites plus haut, le marquage à l'encre ne permet pas d'utiliser un code à barres pour identifier les animaux.

La matière plastique qui satisfait aux exigences rappelées ci-dessus et qui convient parfaitement en pratique est le polyuréthane auquel a été ajouté un additif de protection contre les attaques bactériologiques.

Cette matière est complètement transparente au rayon laser.

Il est clair que, en la rendant sensible au rayon laser, il ne faut pas lui faire perdre ses qualités, ou autrement dit, il est impératif de ne modifier aucunement ses propriétés afin qu'elle reste toujours parfaitement adaptée à son usage. En particulier, le document GB-A 2 107 322 décrit l'utilisation de silicate de calcium comme agent opacifiant pour des matières plastiques mais il s'est avéré qu'un tel agent n'était pas efficace avec certaines matières plastiques, en particulier le polyuréthane, lorsqu'il était utilisé dans des proportions suffisamment faibles pour ne pas changer les propriétés physiques de ces matières. Il en est de même de l'oxyde de titane décrit dans le document JP-A 5 982 185.

Un but de l'invention est donc de parvenir à un procédé qui permette de rendre sensible au rayon laser une matière plastique ou une composition à base de matière plastique, sans altérer aucunement les qualités qu'elle a par ailleurs.

Le procédé de l'invention part d'un procédé connu (p.e. du GB-A 2 107 322) dans lequel, pour rendre une matière plastique sensible au rayon laser, on y incorpore, de préférence quand elle est en particules, une substance opacifiante en quantité efficace pour rendre cette matière plastique suffisamment opaque au rayon laser, à un degré qui permet le marquage au rayon laser, cette substance étant choisie dans le groupe comprenant l'antimoine, l'oxyde d'antimoine ou un mélange de ces substances.

Les substances préférées mentionnées ci-dessus ont l'avantage d'être efficaces, au point de vue de la sensibilité au rayon laser, quand elles sont incorporées à la matière plastique à une proportion relativement faible, de l'ordre de 2 à 6% en poids de la matière plastique de base.

Des proportions plus fortes sont possibles avec les substances indiquées, sans avantage particulier.

Des proportions plus fortes sont possibles aussi avec des substances opacifiantes autres que celles qui sont nommément désignées. Mais on risque alors de modifier les caractéristiques mécaniques de la matière plastique de base.

Il a été constaté que l'on obtient les meilleurs résultats au marquage, pour ce qui est de la finesse des traits, de la reproductibilité d'une plaquette à une autre, de la résistance au frottement, en incorporant la substance opacifiante sous forme d'une poudre ayant une dimension des particules plus fine que celle des particules de la matière plastique. De préférence, la grosseur des particules de la substance opacifiante incorporée est de l'ordre de 1/20 de la grosseur des particules de la matière plastique.

L'invention concerne aussi tout article en matière plastique naturellement transparente au rayon laser et rendue opaque à ce dernier, au moins au degré minimum permettant son marquage en surface par un rayon laser, conformément au procédé expliqué ci-dessus, par addition à la matière plastique d'une substance opacifiante au rayon laser, une substance choisie parmi les suivantes:
antimoine, oxyde d'antimoine ou un mélange de ces substances.

Une matière plastique rendue opaque par le procédé de l'invention, par exemple une plaquette en polyuréthane constituant une marque d'oreille pour animal, se marque sans difficulté, en chiffres arabes ou en code à barres, avec précision, à l'aide d'un laser, par exemple, d'un laser YAG d'une puissance ne dépassant pas 400 W, émettant un rayon d'un diamètre de 0,1 mm, ou moins. La pièce à marquer est posée sur un support quelconque, peu réfléchissant pour la protection de l'opérateur.

Le dessin annexé montre deux marques d'oreille réalisée conformément au procédé de l'invention à l'aide d'un laser YAG ayant une longueur d'onde de 1,06 micron.

– la figure 1 est une vue de face d'une marque d'oreille portant des chiffres arabes,
– la figure 2 est une vue de face d'une marque d'oreille portant des chiffres arabes et un code à barres,
– la figure 3 est une vue partielle en coupe selon III–III de la figure 2.

La substance opacifiante était du carbonate de plomb, en proportion de 2,4% en poids.

La marque effectuée par le rayon laser apparaît en teinte très foncée, presque d'un noir parfait; les traits ont une grande finesse.

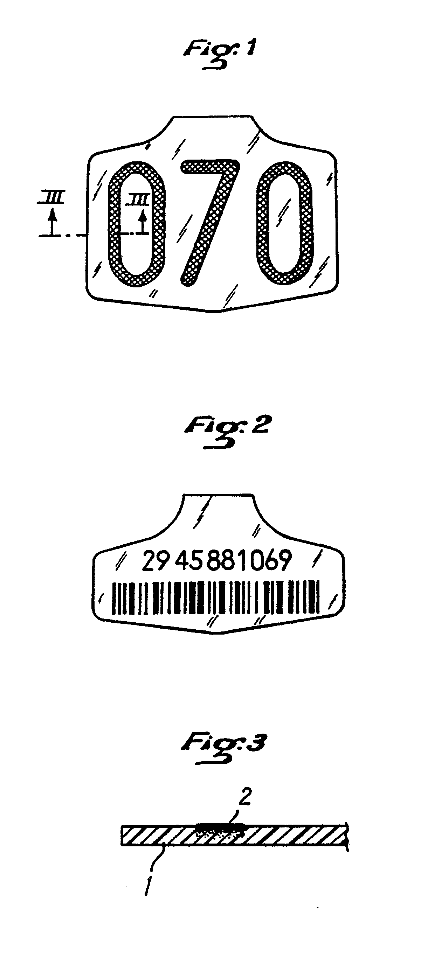

Le marquage réalisé n'est pas comparable à une gravure. La surface de la matière plastique n'est pas creusée; elle semble au contraire être légèrement gonflée ou soulevée. Sur la figure 3, l'épaisseur a été exagérée pour mieux montrer que le marquage intéresse une fraction de l'épaisseur de la plaquette. Par exemple, sur une plaquette 1 d'une épaisseur de 1,2 mm, le marquage 2 a une profondeur de 0,3 à 0,4 mm environ. Le rayon laser utilisé a carbonisé la substance opacifiante sur cette profondeur au sein même de la matière plastique. Un émetteur de rayon laser plus puissant réaliserait un marquage sur une profondeur plus grande, mais sans utilité pratique. Ainsi qu'on l'a dit plus haut, une marque d'oreille pour bovin doit supporter 1000 cycles d'abrasion selon la norme NF-T 54006. Après 5000 cycles les inscriptions des plaquettes des figures 1 et 2 étaient encore lisibles à l'œil, et à l'aide d'un appareil à lecture optique.

On rencontre ici un avantage important d'une marque d'oreille pour animal réalisée conformément au procédé de l'invention et marquée au laser. Il devient possible, avec une marque en code à barres, d'identifier les bêtes de manière automatique, dans les abattoirs, après leur sortie du piège d'abattage, pendant leur transport par un convoyeur à crochets de suspension, au moyen d'un lecteur optique devant lequel les bêtes défilent à une distance de 30 à 50 cm.

L'invention concerne aussi toute marque d'oreille pour animal réalisée en matière plastique, conformément au procédé de l'invention et marquée à l'aide d'un rayon laser, en particulier par l'emploi d'un code à barres.

En particulier, une marque d'oreille en matière plastique contenant 5% environ d'antimoine est particulièrement satisfaisante, l'adjonction d'antimoine à cette proportion n'altérant nullement les caractéristiques mécaniques de la matière de base.

## Revendications

1. Procédé pour rendre sensible à l'action d'un rayon laser une matière plastique, ou une composition à base de matière plastique, par incorporation à ladite matière d'une substance opacifiante, en quantité efficace pour rendre cette matière opaque à un degré qui permet le marquage au rayon laser, caractérisé en ce qu'on choisit la matière opacifiante parmi les suivantes:
antimoine, oxyde d'antimoine ou un mélange de ces substances.

2. Procédé selon la revendication 1 caractérisé en ce qu'on ajoute la substance opacifiante selon une proportion de 2 à 6% en poids de la matière plastique de base.

3. Procédé selon la revendication 1 caractérisé en ce qu'on ajoute la substance opacifiante à l'état de poudre dont les particules sont plus fines que les particules de la matière plastique.

4. Procédé selon la revendication 1 caractérisé en ce qu'on ajoute la substance opacifiante en particules dont la grosseur est un vingtième environ de la grosseur des particules de la matière plastique.

5. Article en matière plastique rendue opaque au rayon laser par addition d'une substance opacifiante au rayon laser, caractérisé en ce que cette substance est choisie parmi les suivantes:
antimoine, oxyde d'antimoine, ou un mélange de ces substances.

6. Article selon la revendication 5 caractérisé en ce que la substance opacifiante est dans une proportion de 2 à 6% en poids de la matière plastique de base.

7. Article selon la revendication 5 caractérisé en ce que la matière plastique de base est du polyuréthane.

**Patentansprüche**

1. Verfahren, um einen Kunststoff oder eine Zusammensetzung auf Kunststoffbasis gegenüber der Einwirkung eines Laserstrahls empfindlich zu machen, mittels Eingabe eines opazifierenden Stoffes in den Kunststoff in ausreichender Menge, um ihn in einem Ausmass opak zu machen, das eine Markierung mittels eines Laserstrahls gestattet, dadurch gekennzeichnet, dass der opazifierende Stoff unter folgenden ausgewählt wird: Antimon, Antimonoxid oder Mischungen dieser Stoffe.

2. Verfahren nach Anspruch 1, dadurch gekennzeichnet, dass man den opazifierenden Stoff in einem Verhältnis von 2 bis 6 Gew.-% des Ausgangskunststoffes hinzufügt.

3. Verfahren nach Anspruch 1, dadurch gekennzeichnet, dass man den opazifierenden Stoff im pulverförmigen Zustand hinzugibt, wobei die Pulverteilchen feiner als die Teilchen des Kunststoffs sind.

4. Verfahren nach Anspruch 1, dadurch gekennzeichnet, dass man den opazifierenden Stoff in einer Teilchengrösse hinzugibt, die ungefähr 1/20 der Teilchengrösse des Kunststoffes ist.

5. Erzeugnis aus Kunststoff, der mittels Zugabe eines bei Laserlicht opazifierenden Stoffes opak gemacht wurde, dadurch gekennzeichnet, dass dieser Stoff unter folgenden gewählt ist: Antimon, Antimonoxid oder Mischungen dieser Stoffe.

6. Erzeugnis nach Anspruch 5, dadurch gekennzeichnet, dass der opazifierende Stoff in einem Verhältnis von 2 bis 6 Gew.-% des Ausgangskunststoffes vorhanden ist.

7. Erzeugnis nach Anspruch 5, dadurch gekennzeichnet, dass der Ausgangskunststoff Polyurethan ist.

**Claims**

1. A method of making a plastic material, or a composition based on a plastic material, sensitive to the action of laser radiation by incorporating a sufficient quantity of opacifier substance to said plastic material to make said material sufficiently opaque for it to be marked by laser radiation, characterized in that the opacifier substance is selected from the following substances: antimony, antimony oxide or a mixture of these substances.

2. A method according to claim 1, characterized in that the concentration of added opacifier substance lies in the range 2% to 6% by weight of the basic plastic material.

3. A method according to claim 1, characterized in that the opacifier substance is added in the form of a powder whose particles are finer than the particles of the plastic material.

4. A method according to claim 1, characterized in that the opacifier substance is added in the form of particles which are about 1/20-th of the size of the particles of the plastic material.

5. An article made of plastic material which has been made opaque to laser radiation by adding a laser radiation opacifier substance, characterized in that the opacifier substance is selected from the following substances: antimony, antimony oxide or a mixture of these substances.

6. An article according to claim 5, characterized in that the concentration of added opacifier substance lies in the range 2% to 6% by weight of the basic plastic material.

7. An article according to claim 5, characterized in that the basic plastic material is polyurethane.

*Fig: 1*

*Fig: 2*

29 45 881069

*Fig: 3*